# EUROPEAN PATENT APPLICATION

(11) **EP 4 640 469 A1**
(43) Date of publication of application: **29.10.2025**
(21) Application number: 25170004.3
(22) Date of filing: 11.04.2025
(51) Int. Cl.: B60K 35/65

(54) **METHOD FOR CONTROLLING CENTRAL CONTROL SYSTEM OF A VEHICLE, DEVICE, VEHICLE, AND STORAGE MEDIUM**

(30) Priority: 22.04.2024 CN 202410484332
(71) Applicant: Cariad (China) Co., Ltd., Beijing 100028 (CN)
(72) Inventor: TANG, Shuai, Beijing 100028 (CN)
(74) Representative: Müller-Boré & Partner Patentanwälte PartG mbB

(57) **Abstract**

The present disclosure provides a method for controlling a central control system of a vehicle, a control method applied to a central control system of a vehicle, a computer device, a vehicle, a computer-readable storage medium, and a computer program product, relating to the technical field of central control of a vehicle. The method for controlling a central control system of a vehicle comprises: acquiring an image comprising a central control panel of the central control system of the vehicle; identifying at least one control component on the central control panel in the image; determining, in response to detection of a first interaction operation for a first target control component among the at least one control component in the image, operation information associated with the first target control component; and transmitting the operation information to the central control system of the vehicle, so as to enable the central control system of the vehicle to determine a control instruction to be executed on the basis of the operation information.

## Description

### Technical Field

The present disclosure relates to the technical field of central control of a vehicle, and in particular, to a method for controlling a central control system of a vehicle, a control method applied to a central control system of a vehicle, a computer device, a vehicle, a computer-readable storage medium, and a computer program product.

### Background

With the development of various technologies in the field of vehicle technology, such as autonomous driving, advanced driver assistance system, intelligent cockpits, and vehicle intelligent networking, the functions of a central control system of a vehicle have become more diversified and can provide occupants with a variety of different function modules, such as in-vehicle audio-visual entertainment, in-vehicle navigation, vehicle air conditioning control settings, and the like.

A vehicle is typically provided with a central control panel operable by a driver and passengers, enabling control of various in-vehicle functions by the driver and passengers. The interaction between the central control panel and the driver and passengers can be implemented through various types of control components, such as mechanical buttons, touch screens, and the like. However, for the vehicle driver, using control components such as screens or buttons during driving may cause distraction, thereby affecting the driving safety of the vehicle. For the in-vehicle passengers, operating the central control panel in the vehicle depends on the installation positions of control components such as mechanical buttons and touch screens in the vehicle, which imposes certain limitations on flexibility and convenience.

The methods described in this section may not necessarily be those that have been previously envisioned or adopted. Unless otherwise specified, no method described in this section is to be assumed to be prior art merely by virtue of its inclusion herein. Similarly, unless otherwise specified, the problems mentioned in this section are not to be regarded as having been recognized in any prior art.

### Summary

The present disclosure aims to solve at least one of the technical problems existing in the Background. Therefore, an object of the present disclosure is to provide a method for controlling a central control system of a vehicle, wherein a user terminal is used to acquire an image of a central control panel comprised in the central control system of the vehicle and identify a control component therein. Further, operation information can be transmitted to the central control system of the vehicle by detecting an interaction operation of a user for the control component in the image, thereby enabling convenient control of the central control system of the vehicle by the user. By applying the method above, the user is no longer limited by the physical contact distance to the control component when controlling the central control system of the vehicle, and can achieve convenient control from a seating position remote from the central control panel. This solves the problem in the prior art of being reliant on the vehicle driver to operate the central control panel, which may affect the driving safety of the vehicle.

Embodiments of a first aspect of the present disclosure provide a method for controlling a central control system of a vehicle, wherein the central control system comprises a central control panel, the method is applied to a user terminal communicatively connected to the central control system, and the method comprises: acquiring an image comprising the central control panel; identifying at least one control component on the central control panel in the image; determining, in response to detection of a first interaction operation for a first target control component among the at least one control component in the image, operation information associated with the first target control component; and transmitting the operation information to the central control system, so as to enable the central control system to determine a control instruction to be executed on the basis of the operation information.

In the technical solutions of the embodiments of the present disclosure, the user terminal is used to acquire the image comprising the central control panel of the vehicle and perform image identification to obtain at least one control component comprised in the central control panel in the image. Further, operation information can be transmitted to the central control system of the vehicle by detecting the interaction operation of the user on the target control component in the image, so that the central control system of the vehicle can determine a control instruction to be executed on the basis of the operation information of the user, thereby enabling convenient control of the central control system of the vehicle by the user. By applying the method above, even if the seating position of an occupant in the vehicle is remote from the central control panel, the central control system of the vehicle can still be conveniently controlled via the user terminal, without requiring the vehicle driver to operate the central control panel, thereby enhancing the driving safety of the vehicle.

In some embodiments, identifying at least one control component on the central control panel in the image comprises: inputting the image into a computer vision model to obtain the at least one control component output by the computer vision model, wherein the computer vision model is trained using a sample image comprising a reference control component.

In some embodiments, the computer vision model identifies at least one control component in the image on the basis of: determining an image feature of the image; and determining, on the basis of the image feature, the at least one control component, wherein an image feature corresponding to the at least one control component and an image feature corresponding to the reference control component in the sample image are capable of satisfying a preset similarity condition.

In some embodiments, determining, in response to detection of a first interaction operation for a first target control component among the at least one control component in the image, operation information associated with the first target control component comprises: determining an operation type for the first target control component, wherein the operation type comprises at least one of a click, a touch, and a rotation.

In some embodiments, the method for controlling a central control system of a vehicle further comprises: transmitting, in response to detection of a second interaction operation for a second target control component among the at least one control component in the image, an authorization request to the central control system, wherein determining, in response to detection of a first interaction operation for a first target control component among the at least one control component in the image, operation information associated with the first target control component comprises: determining, in response to reception of authorization information returned by the central control system of the vehicle, the operation information.

In some embodiments, transmitting, in response to detection of a second interaction operation for a second target control component among the at least one control component in the image, an authorization request to the central control system comprises: determining an in-vehicle function module associated with the second target control component in the vehicle; and transmitting an authorization request for the in-vehicle function module to the central control system of the vehicle; and wherein determining, in response to detection of a first interaction operation for a first target control component among the at least one control component in the image, operation information associated with the first target control component comprises: determining, in response to reception of authorization information for the in-vehicle function module returned by the central control system of the vehicle and in response to having determined that the first target control component is associated with the in-vehicle function module, the operation information.

Embodiments of a second aspect of the present disclosure provide a control method applied to a central control system of a vehicle, wherein the central control system comprises a central control panel, and the method comprises: determining, in response to reception of operation information transmitted by a user terminal communicatively connected to the central control system of the vehicle, a control instruction to be executed on the basis of the operation information, wherein the operation information is generated by the user terminal by: acquiring an image comprising the central control panel; determining at least one control component on the central control panel in the image; and determining, in response to detection of a first interaction operation for a first target control component among the at least one control component in the image, operation information associated with the first target control component.

In some embodiments, the operation information comprises an operation type of the first interaction operation, and determining a control instruction to be executed on the basis of the operation information comprises: determining an in-vehicle function module corresponding to the first target control component; and determining, on the basis of the operation type for the first target control component, a control instruction for the in-vehicle function module.

In some embodiments, determining, on the basis of the operation type for the first target control component, a control instruction for the in-vehicle function module comprises: determining, on the basis of the operation type, the control instruction from an instruction table corresponding to the in-vehicle function module, wherein the instruction table stores mapping relationships between a plurality of preset operation types and a plurality of preset control instructions.

In some embodiments, the control method applied to a central control system of a vehicle further comprises: receiving an authorization request transmitted by the user terminal; generating notification information for displaying the authorization request; generating, in response to detection of an authorization interaction operation for the notification information, authorization information; and returning the authorization information to the user terminal.

Embodiments of a third aspect of the present disclosure provide an apparatus for controlling a central control system of a vehicle, wherein the central control system comprises a central control panel, the apparatus is applied to a user terminal communicatively connected to the central control system, and the apparatus comprises: an acquisition unit, configured to acquire an image comprising the central control panel; a first determination unit, configured to identify at least one control component on the central control panel in the image; a second determination unit, configured to determine, in response to detection of a first interaction operation for a first target control component among the at least one control component in the image, operation information associated with the first target control component; and a transmission unit, configured to transmit the operation information to the central control system, so as to enable the central control system to determine a control instruction to be executed on the basis of the operation information.

Embodiments of a fourth aspect of the present disclosure provide an apparatus applied to a central control system of a vehicle, wherein the central control system comprises a central control panel, and the apparatus comprises: a third determination unit, configured to determine, in response to reception of operation information transmitted by a user terminal communicatively connected to the central control system of the vehicle, a control instruction to be executed on the basis of the operation information, wherein the operation information is generated by the user terminal using: an acquisition unit, configured to acquire an image comprising the central control panel; a first determination unit, configured to determine at least one control component on the control panel in the image; and a second determination unit, configured to determine, in response to detection of a first interaction operation for a first target control component among the at least one control component in the image, operation information associated with the first target control component.

Embodiments of a fifth aspect of the present disclosure provide a computer device which is configured to execute the method for controlling a central control system of a vehicle according to the first aspect of the present disclosure.

Embodiments of a sixth aspect of the present disclosure provide a computer device which is configured to execute the control method applied to a central control system of a vehicle according to the second aspect of the present disclosure.

Embodiments of a seventh aspect of the present disclosure provide a vehicle which comprises: a central control system comprising a central control panel; and the computer device according to the sixth aspect of the present disclosure.

Embodiments of an eighth aspect of the present disclosure provide a computer-readable storage medium storing instructions that, when executed individually or collectively by one or more processors of a computer device, cause the computer device to execute the method according to the first aspect of the present disclosure or the method according to the second aspect of the present disclosure.

Embodiments of a ninth aspect of the present disclosure provide a computer program product comprising instructions that, when executed individually or collectively by one or more processors of a computer device, cause the computer device to execute the method according to the first aspect of the present disclosure or the method according to the second aspect of the present disclosure.

The description above is merely an overview of the technical solutions of the present disclosure. To enable a clearer understanding of the technical means of the present disclosure so as to implement them in accordance with the contents of the description, and to make objects, features, and advantages described above and others of the present disclosure more apparent and understandable, specific embodiments of the present disclosure are exemplified below.

### Brief Description of the Drawings

In the drawings, unless otherwise specified, the same reference numerals denote the same or similar parts or elements throughout a plurality of drawings. These drawings are not necessarily drawn to scale. It is to be understood that these drawings depict only some embodiments according to the present disclosure and are not to be construed as limiting the scope of the present disclosure.
FIG. 1 is a flowchart of a method for controlling a central control system of a vehicle according to an embodiment of the present disclosure;
FIG. 2 is a flowchart of a method for controlling a central control system of a vehicle according to another embodiment of the present disclosure;
FIG. 3 is a flowchart of a control method applied to a central control system of a vehicle according to an embodiment of the present disclosure;
FIG. 4 is a flowchart of an interaction process for controlling a central control system of a vehicle according to an embodiment of the present disclosure;
FIG. 5 is a structural block diagram of an apparatus for controlling a central control system of a vehicle according to an embodiment of the present disclosure;
FIG. 6 is a structural block diagram of an apparatus applied to a central control system of a vehicle according to an embodiment of the present disclosure; and
FIG. 7 is a structural block diagram of an exemplary computer device applicable to an exemplary embodiment of the present disclosure.

### Detailed Description of the Embodiments

Exemplary embodiments of the present disclosure are described below with reference to the drawings, which comprise various details of the embodiments of the present disclosure to facilitate understanding and are to be considered merely exemplary. Therefore, those of ordinary skill in the art are to recognize that various changes and modifications can be made to the embodiments described herein without departing from the scope of the present disclosure. Similarly, for the sake of clarity and conciseness, the description below omits details of well-known functions and structures.

In the present disclosure, unless otherwise specified, the terms "first", "second", and the like used to describe various elements are not intended to limit the positional relationship, temporal relationship, or importance relationship of these elements. Such terms are merely used to distinguish one element from another. In some examples, the first element and the second element may point to the same instance of the element, while in some cases, on the basis of the contextual description, they may also refer to different instances.

The terms used in the description of the various examples in the present disclosure are intended to describe specific examples only and are not intended to impose limitations. Unless otherwise explicitly specified in the context, if the number of elements is not specifically limited, the number of the elements may be one or more. In addition, the term "and/or" used in the present disclosure encompasses any one of the listed items and all possible combinations thereof.

As described above, the use of central control components such as screens or buttons, by the vehicle driver during driving may cause distraction, thereby affecting the driving safety of the vehicle. To solve this problem, one implementation in the related art is to use voice instructions to interact with the central control system. However, the functionalities achievable through voice interaction are limited and cannot provide comprehensive and accurate control over the central control system of the vehicle. Another implementation is to install compatible applications on the central control system of the vehicle and the user terminal, allowing the user to configure the applications (e.g., audio-visual entertainment programs and navigation programs) on the central control system of the vehicle by operating the applications on the user terminal. However, this method requires a strict pairing between the applications of the central control system of the vehicle and the applications of the user terminal, resulting in limited versatility.

On the basis of this, the present disclosure provides a method for controlling a central control system of a vehicle, wherein the user terminal acquires an image of the central control panel comprised in the central control system of the vehicle and identifies the control component therein. Further, an interaction operation of the user for the control component in the image can be detected. By transmitting operation information of the user to the central control system of the vehicle, the central control system can determine a control instruction to be executed on the basis of the operation information, thereby enabling the user to control the central control system of the vehicle.

Some embodiments of the present disclosure provide a method for controlling a central control system of a vehicle, wherein the central control system comprises a central control panel, and the method is applied to a user terminal communicatively connected to the central control system.

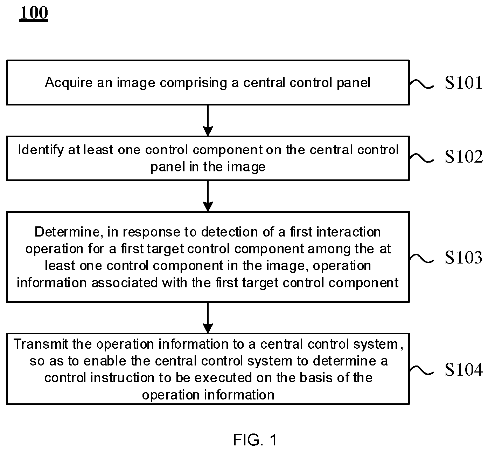

FIG. 1 shows a method 100 for controlling a central control system of a vehicle according to an embodiment of the present disclosure. As shown in FIG. 1, the method 100 comprises:
step S101, acquiring an image comprising a central control panel;
step S102, identifying at least one control component on the central control panel in the image;
step S103, determining, in response to detection of a first interaction operation for a first target control component among the at least one control component in the image, operation information associated with the first target control component; and
step S104, transmitting the operation information to the central control system, so as to enable the central control system to determine a control instruction to be executed on the basis of the operation information.

According to the method 100 of the embodiments of the present disclosure, the user terminal is used to acquire the image comprising the central control panel of the vehicle and perform image identification to obtain at least one control component comprised in the central control panel in the image. Further, operation information can be transmitted to the central control system of the vehicle by detecting the interaction operation of the user on the target control component in the image, so that the central control system of the vehicle can determine a control instruction to be executed on the basis of the operation information of the user, thereby enabling convenient control of the central control system of the vehicle by the user. By applying the method 100 described above to the user terminal, even if the seating position of an occupant in the vehicle is remote from the central control panel, the central control system of the vehicle can still be conveniently controlled via the user terminal, without requiring the vehicle driver to operate the central control panel, thereby enhancing the driving safety of the vehicle.

In some examples, the user terminal may be of various types, such as a smartphone, tablet, or smart wearable devices (e.g., smart watches, smart glasses, etc.), as long as it is capable of enabling human-machine interaction with the user.

In some examples, the communication connection between the user terminal and the central control system of the vehicle may be implemented using various communication technologies, such as Wi-Fi connection, Bluetooth connection, cellular communication connection, or the like.

In some examples, a specific application may be installed on the user terminal, enabling the implementation of the various steps of the method 100 described above using the application.

In some examples, the user terminal comprises a camera component, allowing the image of the central control panel to be captured using the camera component in step S101. In other examples, the user terminal may be communicatively connected to an imaging apparatus, thereby enabling the acquisition of an image of the central control panel captured and transmitted by the imaging apparatus.

In some examples, the image comprising the central control panel in step S101 may be obtained on the basis of a single-frame photo captured by the camera. In other examples, the image comprising the central control panel in step S101 may be obtained on the basis of the video captured by the camera, that is, at least one image frame may be acquired from the video comprising the central control panel, and the image of the central control panel comprised in the image frame is then identified.

In some embodiments, identifying at least one control component on the central control panel in the image in step S102 comprises: inputting the image into a computer vision model to obtain the at least one control component output by the computer vision model, wherein the computer vision model is trained using a sample image comprising a reference control component. Thus, the computer vision model can be used to more efficiently and accurately identify the control components on the central control panel.

In some examples, at least one control component on the central control panel may be of various types, such as a touch screen, a mechanical button, a mechanical knob, and the like.

In some examples, the computer vision model may be constructed and trained by: constructing an initial computer vision model, which may be constructed, for example, on the basis of various types of neural networks such as convolutional neural networks, spatial attention networks, etc.; inputting a sample image comprising a sample central control panel into the initial computer vision model; acquiring at least one predicted control component output by the initial computer vision model; calculating a loss value on the basis of at least one pre-annotated reference control component and the at least one predicted control component output by the initial model; and adjusting parameters of the initial computer vision model on the basis of the loss value. By using the pre-annotated sample image to perform supervised training on the initial computer vision model, a computer vision model capable of efficiently and accurately identifying at least one control component in the control panel can be obtained.

In some examples, unsupervised training may be performed on the initial computer vision model using the sample image comprising the reference control component. For example, unsupervised training may be performed on the basis of consistency learning, allowing model training to be performed while reducing sample annotation costs, thereby efficiently and conveniently obtaining a trained computer vision model. It can be understood that the training for the initial computer vision model may be implemented by applying various deep learning algorithms, which are not limited in the present disclosure.

In some embodiments, the computer vision model identifies at least one control component in the image on the basis of: determining an image feature of the image; and determining, on the basis of the image feature, the at least one control component, wherein an image feature corresponding to the at least one control component and an image feature corresponding to the reference control component in the sample image are capable of satisfying a preset similarity condition. Thus, more accurate image identification can be achieved through the process of extracting and comparing image features.

In some examples, the computer vision model may comprise a feature extraction network to extract image features such as shape features, color features, and texture features of the image. In some examples, the computer vision model may further comprise a text identification network to identify sequences of words comprised in the central control panel in the image, thereby enabling more accurate identification of the control components. On the basis of feature extraction, the image feature of the input image can be compared with the image feature of the reference control component in the sample memorized by the model. The image area whose feature comparison result satisfies the preset similarity condition is then output as the predicted control component of the model. For example, the annotated sample used for training the computer vision model can annotate N different types of reference control components. Through supervised training, the model memorizes the image features of the N types of reference control components. The confidence that the features of a specific area in the image belong to the N types of reference control components can then be output by comparing the similarity of the image features. On the basis of a preset confidence threshold, a control component prediction result can further be obtained.

In some examples, the computer vision model may also use classifiers to implement predictions of control components on the basis of feature extraction. In this example, the model may be subjected to supervised training using samples annotated with reference control component categories (which may be binary category information or multivariate category information). This allows the tuned multi-class classifier to fit a linear or non-linear classification function to output a classification result that can indicate whether an image area can correspond to the reference control component.

In some examples, the computer vision model may use a two-stage area prediction-category prediction algorithm to determine the area where the control component of the central control panel is located in the image and the category of the control component, or may use an end-to-end object detection algorithm to output the area and category information of the control component, which is not limited in the present disclosure.

In some examples, the central control panel may comprise a plurality of control components, and the areas where the plurality of control components are located in the image may be discrete. In this case, the identification result of the at least one control component in the image may comprise a plurality of controllable areas. For example, identification results of the controllable areas may be output in the form of an identification box, a highlighted mask, an identification information label, a display area magnification, or the like, enabling the user to accurately interact with the controllable areas.

In some embodiments, determining, in response to detection of a first interaction operation for a first target control component among the at least one control component in the image, operation information associated with the first target control component in step S103 comprises: determining an operation type for the first target control component, wherein the operation type comprises at least one of a click, a touch, and a rotation. Thus, the operation type can be used to more accurately characterize the interaction operation of the user on the control component, enabling the central control system of the vehicle to accurately determine the control instruction to be executed.

In some examples, the user can directly perform operations such as mechanical clicks (for a mechanical button), mechanical rotations (for a mechanical knob), touch clicks, touch slides, touch rotations (for a touch screen), and the like on the first target control component in the image. In other examples, after the user terminal completes the identification of the control component, preset operation buttons may be directly displayed around the control component. For example, a left-rotate button and a right-rotate button can be displayed near the mechanical knob, allowing the user to convey the operation intent by clicking the left-rotate button or the right-rotate button. This enables the user terminal to more directly and accurately determine the operation information for rotating the mechanical knob.

In some examples, the operation information may further comprise additional content. For example, when the control component is a touch screen, the operation information may further comprise information such as touch coordinates, touch pressure, or the like of the user on the touch screen. When the control component is a mechanical knob, the operation information may further comprise information such as a rotation direction, rotation angle, or the like of the user, to more accurately and comprehensively indicate the interaction operation information of the user.

By applying the method 100 above, individuals other than the vehicle driver can control the central control system of the vehicle from a position remote from the central control system of the vehicle. However, the control of the central control system of the vehicle by other individuals may affect the safety of the vehicle.

On the basis of this, in some embodiments, the method 100 for controlling a central control system of a vehicle further comprises: transmitting, in response to detection of a second interaction operation for a second target control component among the at least one control component in the image, an authorization request to the central control system, wherein determining, in response to detection of a first interaction operation for a first target control component among the at least one control component in the image, operation information associated with the first target control component comprises: determining, in response to reception of authorization information returned by the central control system of the vehicle, the operation information. Thus, after acquiring authorization from the central control system of the vehicle, the user terminal can control the central control system of the vehicle to ensure safety.

In some examples, the steps of requesting authorization and receiving authorization described above can be optionally set. For example, it may be preset to a mode in which the user terminal can control the central control system of the vehicle without needing to acquire the authorization information, or to a mode in which the user terminal can only control the central control system of the vehicle after acquiring the authorization information.

In practical application scenarios, the central control system of the vehicle may comprise various types of control components, and the function modules corresponding to different control components may have different degrees of impact on the safety of the vehicle. For example, an electronic shift component can directly affect the driving safety of the vehicle, a navigation component may affect the driving operation of the driver, and an air conditioning setting component has a minimal impact on the safety of the vehicle.

On the basis of this, in some embodiments, transmitting, in response to detection of a second interaction operation for a second target control component among the at least one control component in the image, an authorization request to the central control system comprises: determining an in-vehicle function module associated with the second target control component in the vehicle; and transmitting an authorization request for the in-vehicle function module to the central control system of the vehicle; and wherein determining, in response to detection of a first interaction operation for a first target control component among the at least one control component in the image, operation information associated with the first target control component in step S103 comprises: determining, in response to reception of authorization information for the in-vehicle function module returned by the central control system of the vehicle and in response to having determined that the first target control component is associated with the in-vehicle function module, the operation information. When the control components of the central control panel correspond to different in-vehicle function modules, by executing the steps above, authorization of the vehicle for the specific in-vehicle function module can be acquired, allowing the terminal to control only the authorized module, thereby further enhancing flexibility and safety.

In some examples, the in-vehicle function modules may comprise an audio-visual entertainment module, a navigation module, an air conditioning setting module, and the like. The control instructions to be executed may be of various types, such as a music playback instruction corresponding to the audio-visual entertainment module, a navigation off instruction corresponding to the navigation module, an air conditioning on instruction corresponding to the air conditioning setting module, and the like. Each in-vehicle function module may correspond to one or more control components. For example, the air conditioning setting module may correspond to a mechanical button for turning air conditioning on/off, a mechanical button for cooling/heating, and a mechanical knob for adjusting the wind speed. It can be understood that the division mode of in-vehicle function modules corresponds to the regional authority division mode of the control components. When the control authority of certain control components corresponds to the same authorization request, these control components are to be divided into the same function module, so that the user terminal and the central control system of the vehicle can transmit the authorization request on the basis of unified mapping information between the control components and the in-vehicle function module.

As described above, the central control panel may comprise a plurality of control components in a plurality of controllable areas. In this case, the controllable areas on the central control panel may be divided on the basis of the in-vehicle function modules associated with the control components. The identification result of the control components on the central control panel in the image by the user terminal may comprise a plurality of functional areas, each corresponding to a different in-vehicle function module.

In the examples above, when the computer vision model is used to identify a plurality of functional areas comprising the control components in the central control panel, annotation information of the sample data used for training the model may comprise a reference functional area, enabling efficient and accurate identification by the computer vision model.

In some examples, the first target control component and the second target control component may be the same, and the first interaction operation and the second interaction operation may also be the same. In this case, an authorization request may be transmitted, in response to detection of an interaction operation of the user on the target control component, to the central control system of the vehicle, and after obtaining the authorization information, operation information for the target control component may be determined on the basis of the interaction operation.

In other examples, the first target control component and the second target control component may be the same, and the first interaction operation and the second interaction operation may be different. In this case, an authorization request may be transmitted, in response to detection of the first interaction operation of the user on the target control component, to the central control system of the vehicle. After obtaining the authorization information, in response to detection of the second interaction operation of the user on the target control component, operation information for the target control component may be determined on the basis of the second interaction operation.

In yet other examples, the first target control component and the second target control component may be different, and accordingly, the first interaction operation and the second interaction operation may also be different. In this case, an authorization request for a functional area A may be transmitted, in response to detection of the first interaction operation of the user on the first target control component in the functional area A, to the central control system of the vehicle. After obtaining the authorization information, in response to detection of the second interaction operation of the user on the second target control component in the functional area A, operation information for the second target control component may be determined on the basis of the second interaction operation. When the second target control component does not belong to the functional area A, the central control system of the vehicle cannot be controlled on the basis of the authorization information for the functional area A.

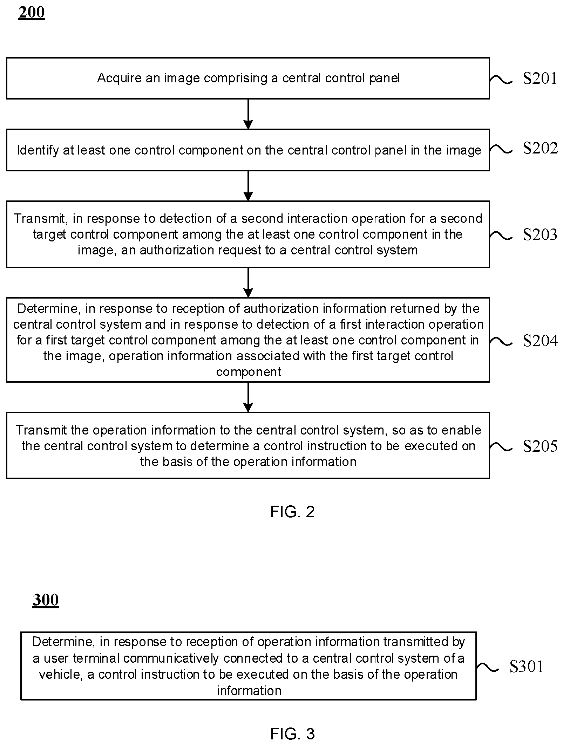

FIG. 2 shows a flowchart of a method 200 for controlling a central control system of a vehicle according to another embodiment of the present disclosure. As shown in FIG. 2, the method 200 comprises:
step S201, acquiring an image comprising a central control panel;
step S202, identifying at least one control component on the central control panel in the image;
step S203, transmitting, in response to detection of a second interaction operation for a second target control component among the at least one control component in the image, an authorization request to the central control system;
step S204, determining, in response to reception of authorization information returned by the central control system and in response to detection of a first interaction operation for a first target control component among the at least one control component in the image, operation information associated with the first target control component; and
step S205, transmitting the operation information to the central control system, so as to enable the central control system to determine a control instruction to be executed on the basis of the operation information.

By applying the method 200 above, the user terminal can be used to acquire the image comprising the central control panel of the vehicle and perform image identification to obtain at least one control component comprised in the central control panel in the image. When an interaction operation performed by the user on the control component in the image is detected, an authorization request is transmitted to the central control system of the vehicle. After obtaining authorization, the operation information of the user can be transmitted to the central control system of the vehicle, so that the central control system of the vehicle can determine a control instruction to be executed on the basis of the operation information of the user, thereby enabling convenient control of the central control system of the vehicle by the user.

Some embodiments of the present disclosure provide a control method applied to a central control system of a vehicle, the central control system comprising a central control panel.

FIG. 3 shows a flowchart of a control method 300 applied to a central control system of a vehicle according to an embodiment of the present disclosure. As shown in FIG. 3, the method 300 comprises:
step S301, determining, in response to reception of operation information transmitted by a user terminal communicatively connected to the central control system of the vehicle, a control instruction to be executed on the basis of the operation information. The operation information in step S301 is generated by the user terminal by: acquiring an image comprising the central control panel; determining at least one control component on the central control panel in the image; and determining, in response to detection of a first interaction operation for a first target control component among the at least one control component in the image, operation information associated with the first target control component.

By applying the method 300 above, the central control system of the vehicle can determine the control instruction to be executed on the basis of the interaction operation information of the user on the central control panel in the image, that is, the interaction operation of the user on a virtual central control panel (the central control panel in the image) on the user terminal is mapped to a physical central control panel of the central control system, thereby enabling convenient control of the central control system of the vehicle by the user. In this implementation, even if the seating position of an occupant in the vehicle is remote from the central control panel, the central control system of the vehicle can still be conveniently controlled via the user terminal, without requiring the vehicle driver to operate the central control panel, thereby enhancing the driving safety of the vehicle.

In some embodiments, the operation information comprises an operation type of the first interaction operation, and determining a control instruction to be executed on the basis of the operation information comprises: determining an in-vehicle function module corresponding to the first target control component; and determining, on the basis of the operation type of the first interaction operation for the first target control component, a control instruction for the in-vehicle function module. Thus, the instruction to be executed can be conveniently and efficiently determined on the basis of the mapping relationship between the control components and the in-vehicle function modules, and the mapping relationship between the operation types and the control instructions.

In some embodiments, determining, on the basis of the operation type of the first interaction operation for the first target control component, a control instruction for the in-vehicle function module comprises: determining, on the basis of the operation type, the control instruction from an instruction table corresponding to the in-vehicle function module, wherein the instruction table stores mapping relationships between a plurality of preset operation types and a plurality of preset control instructions. Thus, the control instruction to be executed can be conveniently and efficiently determined by table lookup.

In some embodiments, the control method applied to a central control system of a vehicle further comprises: receiving an authorization request transmitted by the user terminal; generating notification information for displaying the authorization request; generating, in response to detection of an authorization interaction operation for the notification information, authorization information; and returning the authorization information to the user terminal. Thus, the authorization information for the user terminal can be determined through an authorization interaction operation of the driver or a specific occupant, thereby ensuring safety.

In some examples, the notification information for displaying the authorization request may be an authorization request notification displayed in text form on a display screen, and authorization and non-authorization interaction buttons may be simultaneously displayed to the driver or the specific occupant. In this case, the authorization interaction operation may be an operation in which the driver or the specific occupant clicks the authorization interaction button.

In other examples, the notification information for displaying the authorization request may be voice broadcast information. In this case, the authorization interaction operation may be an operation in which the driver or the specific occupant gives a voice instruction for authorization.

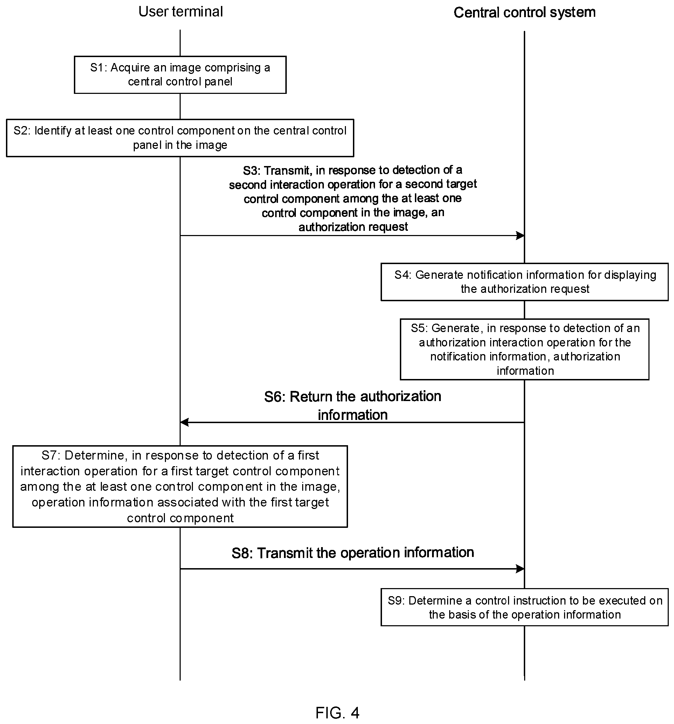

FIG. 4 shows a flowchart of an interaction process for controlling a central control system of a vehicle according to an embodiment of the present disclosure. As shown in FIG. 4, the interaction process for controlling a central control system of a vehicle comprises:
step S1, acquiring, by a user terminal, an image comprising a central control panel;
step S2, identifying, by the user terminal, at least one control component on the central control panel in the image;
step S3, transmitting, by the user terminal, in response to detection of a second interaction operation for a second target control component among the at least one control component in the image, an authorization request to the central control system;
step S4, generating, by the central control system, notification information for displaying the authorization request;
step S5, generating, by the central control system, in response to detection of an authorization interaction operation for the notification information, authorization information;
step S6, returning, by the central control system, the authorization information to the user terminal;
step S7, determining, by the user terminal, in response to detection of a first interaction operation for a first target control component among the at least one control component in the image, operation information associated with the first target control component;
step S8, transmitting, by the user terminal, the operation information to the central control system; and
step S9, determining, by the central control system, a control instruction to be executed on the basis of the operation information.

By applying the interaction flow above, the user terminal can be used to acquire the image comprising the central control panel of the vehicle and perform image identification to obtain at least one control component comprised in the central control panel in the image. When an interaction operation performed by the user on the control component in the image is detected, an authorization request is transmitted to the central control system of the vehicle. After obtaining authorization, the operation information of the user can be transmitted to the central control system of the vehicle, so that the central control system of the vehicle can determine a control instruction to be executed on the basis of the operation information of the user, thereby enabling convenient control of the central control system of the vehicle by the user.

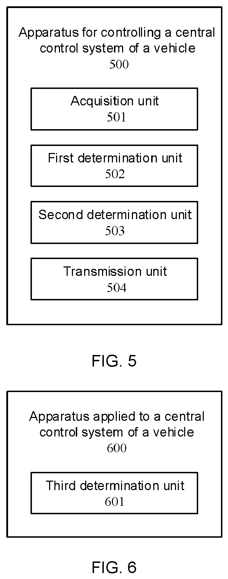

Some embodiments of the present disclosure provide an apparatus for controlling a central control system of a vehicle. FIG. 5 is a structural block diagram of an apparatus 500 for controlling a central control system of a vehicle according to an embodiment of the present disclosure. The central control system comprises a central control panel, and the apparatus 500 is applied to a user terminal communicatively connected to the central control system. As shown in FIG. 5, the apparatus 500 comprises:
an acquisition unit 501, configured to acquire an image comprising the central control panel;
a first determination unit 502, configured to identify at least one control component on the central control panel in the image;
a second determination unit 503, configured to determine, in response to detection of a first interaction operation for a first target control component among the at least one control component in the image, operation information associated with the first target control component; and
a transmission unit 504, configured to transmit the operation information to the central control system, so as to enable the central control system to determine a control instruction to be executed on the basis of the operation information.

According to some embodiments, the first determination unit 502 is configured to input the image into a computer vision model to obtain the at least one control component output by the computer vision model, wherein the computer vision model is trained using a sample image annotated with a reference control component.

According to some embodiments, the computer vision model identifies a control component in the image on the basis of: determining an image feature of the image; and determining, on the basis of the image feature, the at least one control component, wherein an image feature corresponding to the at least one control component and an image feature corresponding to the reference control component in the sample image are capable of satisfying a preset similarity condition.

According to some embodiments, the second determination unit 503 is configured to determine an operation type for the first target control component, wherein the operation type comprises at least one of a click, a touch, and a rotation.

According to some embodiments, the transmission unit 504 is further configured to transmit, in response to detection of a second interaction operation for a second target control component among the at least one control component in the image, an authorization request to the central control system. The second determination unit 503 is configured to determine, in response to reception of authorization information returned by the central control system of the vehicle, the operation information.

According to some embodiments, the transmission unit 504 is configured to: determine an in-vehicle function module associated with the second target control component in the vehicle; and transmit an authorization request for the in-vehicle function module to the central control system of the vehicle. Furthermore, the second determination unit 503 is configured to determine, in response to reception of authorization information for the in-vehicle function module returned by the central control system of the vehicle and in response to having determined that the first target control component is associated with the in-vehicle function module, the operation information.

It is to be understood that the operations of various units of the apparatus 500 for controlling a central control system of a vehicle, as shown in FIG. 5, may correspond to various steps in the method 100 for controlling a central control system of a vehicle described in FIG. 1. Thus, the operations, features, and advantages described above for the method 100 are likewise applicable to the apparatus 500 and the various units comprised therein. For the sake of brevity, certain operations, features, and advantages are not repeated herein.

Some embodiments of the present disclosure provide an apparatus applied to a central control system of a vehicle. FIG. 6 is a structural block diagram of an apparatus 600 applied to a central control system of a vehicle according to an embodiment of the present disclosure, the central control system comprising a central control panel. As shown in FIG. 6, the apparatus 600 comprises:
a third determination unit 601, configured to determine, in response to reception of operation information transmitted by a user terminal communicatively connected to the central control system of the vehicle, a control instruction to be executed on the basis of the operation information, wherein the operation information is determined by the user terminal using the acquisition unit 501, the first determination unit 502, and the second determination unit 503 as described above.

According to some embodiments, the operation information comprises an operation type of the first interaction operation, and the third determination unit 601 is configured to: determine an in-vehicle function module corresponding to the first target control component; and determine, on the basis of the operation type for the first target control component, a control instruction for the in-vehicle function module.

According to some embodiments, the third determination unit 601 is configured to determine, on the basis of the operation type, the control instruction from an instruction table corresponding to the in-vehicle function module, wherein the instruction table stores mapping relationships between a plurality of preset operation types and a plurality of preset control instructions.

According to some embodiments, the apparatus 600 further comprises an authorization unit which is configured to: receive an authorization request transmitted by the user terminal; generate notification information for displaying the authorization request; generate, in response to detection of an authorization interaction operation for the notification information, authorization information; and return the authorization information to the user terminal.

It is to be understood that the operations of various units of the apparatus 600 applied to a central control system of a vehicle, as shown in FIG. 6, may correspond to various steps in the method 300 applied to a central control system of a vehicle described in FIG. 3. Thus, the operations, features, and advantages described above for the method 300 are likewise applicable to the apparatus 600 and the various units comprised therein. For the sake of brevity, certain operations, features, and advantages are not repeated herein.

Some embodiments of the present disclosure provide a computer device which is configured to execute the method 100 for controlling a central control system of a vehicle, as described above.

Some embodiments of the present disclosure provide a computer device which is configured to execute the control method 300 applied to a central control system of a vehicle, as described above.

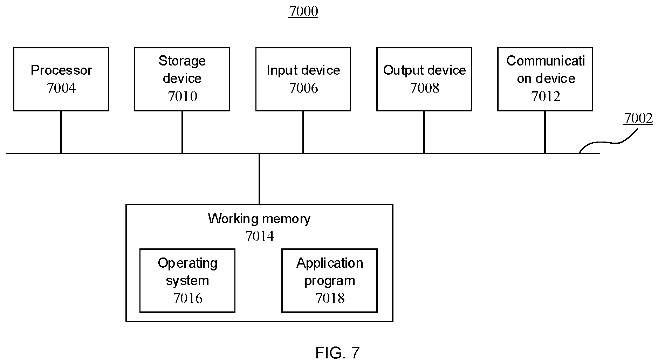

Referring to FIG. 7, a computer device 7000 may comprise elements connected to or in communication with a bus 7002 (possibly via one or more interfaces). For example, the computer device 7000 may comprise a bus 7002, one or more processors 7004, one or more input devices 7006, and one or more output devices 7008. The one or more processors 7004 may be any type of processor and may include, but are not limited to, one or more general-purpose processors and/or one or more special-purpose processors (e.g., dedicated processing chips). The processor 7004 may process instructions executed within the computer device 7000, comprising instructions stored in or on a memory for displaying graphical information of a GUI on an external input/output device (such as a display device coupled to an interface). In other embodiments, if needed, a plurality of processors and/or a plurality of buses may be used with a plurality of memories. Likewise, a plurality of computer devices may be connected, each providing part of the required operations (e.g., as a server array, a set of blade servers, or a multiprocessor system). In FIG. 7, a processor 7004 is illustrated as an example.

The input device 7006 may be any type of device capable of inputting information to the computer device 7000. The input device 7006 may receive input numerical or character information and generate key signal inputs related to user settings and/or functional control of the computer device for event extraction, and may include, but is not limited to, a mouse, keyboard, touch screen, trackpad, trackball, joystick, microphone, and/or remote control. The output device 7008 may be any type of device capable of presenting information, and may include, but is not limited to, a display, speaker, video/audio output terminal, vibrator, and/or printer.

The computer device 7000 may further comprise a non-transitory storage device 7010 or be connected to the non-transitory storage device 7010. The non-transitory storage device may be any storage device that is non-transitory and capable of storing data, and may include, but is not limited to, a magnetic disk drive, optical storage device, solid-state memory, floppy disk, flexible disk, hard disk, magnetic tape, any other magnetic medium, optical disc or any other optical medium, read-only memory (ROM), random access memory (RAM), cache memory, and/or any other memory chip or cartridge, and/or any other medium from which a computer can read data, instructions, and/or code. The non-transitory storage device 7010 may be detachable from the interface. The non-transitory storage device 7010 may have data/programs (comprising instructions)/code/modules for implementing the methods and steps described above.

The computer device 7000 may further comprise a communication device 7012. The communication device 7012 may be any type of device or system that enables communication with external devices and/or networks, and may include, but is not limited to, a modem, network card, infrared communication device, wireless communication device, and/or chipset, such as a Bluetooth device, Wi-Fi device, WiMax device, cellular communication device, and/or the like.

The computer device 7000 may further comprise a working memory 7014 which may be any type of working memory capable of storing programs (comprising instructions) and/or data useful for the operation of the processor 7004, and may include, but is not limited to, random access memory and/or read-only memory devices.

The software elements (programs) may reside in the working memory 7014, including, but not limited to, an operating system 7016, one or more applications 7018, drivers, and/or other data and code. Instructions for performing the methods and steps described above may be comprised in one or more applications 7018, and the methods above may be implemented by the processor 7004 reading and executing the instructions of the one or more applications 7018. The executable code or source code of the instructions of the software elements (programs) may also be downloaded from a remote location.

It is also to be understood that various modifications may be made according to specific requirements. For example, custom hardware may also be used, and/or specific elements may be implemented using hardware, software, firmware, middleware, microcode, hardware description language, or any combination thereof. For example, part or all of the disclosed methods and devices may be implemented by programming hardware (e.g., programmable logic circuits comprising field-programmable gate arrays (FPGA) and/or programmable logic arrays (PLA)) using logic and algorithms according to the present disclosure, in an assembly language or a hardware programming language (such as VERILOG, VHDL, C ++).

It is also to be understood that the foregoing method may be implemented in a server-client mode. For example, the client may receive data input by a user and transmit the data to the server. The client may also receive the data input by the user, perform part of the processing in the foregoing method, and transmit the processed data to the server. The server may receive data from the client, execute the foregoing method or another part of the foregoing method, and return the execution result to the client. The client may receive the execution result of the method from the server and, for example, present it to the user through an output device. The client and the server are generally located remotely from each other and typically interact through a communication network. The relationship between the client and the server is established by running computer programs on respective computer devices that have a client-server relationship with each other. The server may be a server of a distributed system or a server incorporating a blockchain. The server may also be a cloud server, or an intelligent cloud computing server or intelligent cloud host equipped with artificial intelligence technology. The cloud server is a host product in a cloud computing service system, which solves the shortcomings of difficult management and weak business scalability in traditional physical hosts and virtual private server (VPS) services.

It is also to be understood that components of the computer device 7000 may be distributed over a network. For example, some processing may be performed using one processor, while other processing may be performed by another processor located remotely from the first processor. Other components of the computer device 7000 may also be similarly distributed. In this way, the computer device 7000 may be interpreted as a distributed computing system performing processing at a plurality of locations.

Some embodiments of the present disclosure provide a vehicle which comprises: a central control system comprising a central control panel; and the computer device as described above, capable of executing the method 100 for controlling a central control system of a vehicle.

Some embodiments of the present disclosure provide a computer-readable storage medium storing instructions that, when executed individually or collectively by one or more processors of a computer device, cause the computer device to execute the method 100 above or the method 300 above.

A computer-readable medium may be a tangible medium that may comprise or store a program for use by, or in conjunction with an instruction execution system, apparatus, or device. A machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may comprise an electrical connection on the basis of one or more wires, a portable computer disk, a hard disk, a random-access memory (RAM), a read-only memory (ROM), an erasable programmable read-only memory (EPROM) or flash memory, an optical fiber, a portable compact disc read-only memory (CD-ROM), an optical storage device, a magnetic storage device, or any suitable combination thereof.

Some embodiments of the present disclosure provide a computer program product which comprises instructions that, when executed individually or collectively by one or more processors of a computer device, cause the computer device to execute the method 100 above or the method 300 above.

Finally, it is to be noted that the embodiments above are merely provided to illustrate the technical solutions of the present disclosure and are not intended to limit the same. Although the present disclosure has been described in detail with reference to the foregoing embodiments, those skilled in the art are to understand that modifications may still be made to the technical solutions described in the foregoing embodiments, or part or all of the technical features may be equivalently substituted. However, such modifications or substitutions do not cause the essence of the corresponding technical solutions to deviate from the scope of the technical solutions of the embodiments of the present disclosure, and are to fall within the scope of the claims and the description of the present disclosure. In particular, as long as there is no structural conflict, the technical features mentioned in the various embodiments may be combined in any manner. The present disclosure is not limited to the specific embodiments disclosed herein, but comprises all technical solutions falling within the scope of the claims.

## Claims

1. A method for controlling a central control system of a vehicle, wherein the central control system comprises a central control panel, the method is applied to a user terminal communicatively connected to the central control system, and the method comprises:
acquiring an image comprising the central control panel;
identifying at least one control component on the central control panel in the image;
determining, in response to detection of a first interaction operation for a first target control component among the at least one control component in the image, operation information associated with the first target control component; and
transmitting the operation information to the central control system, so as to enable the central control system to determine a control instruction to be executed on the basis of the operation information.

2. The method according to claim 1, wherein identifying at least one control component on the central control panel in the image comprises:
inputting the image into a computer vision model to obtain the at least one control component output by the computer vision model, wherein the computer vision model is trained using a sample image comprising a reference control component.

3. The method according to claim 2, wherein the computer vision model identifies a control component in the image on the basis of:
determining an image feature of the image; and
determining, on the basis of the image feature, the at least one control component, wherein an image feature corresponding to the at least one control component and an image feature corresponding to the reference control component in the sample image are capable of satisfying a preset similarity condition.

4. The method according to any one of claims 1 to 3, wherein determining, in response to detection of a first interaction operation for a first target control component among the at least one control component in the image, operation information associated with the first target control component comprises:
determining an operation type for the first target control component, wherein the operation type comprises at least one of a click, a touch, and a rotation.

5. The method according to any one of claims 1 to 3, further comprising:
transmitting, in response to detection of a second interaction operation for a second target control component among the at least one control component in the image, an authorization request to the central control system,
wherein determining, in response to detection of a first interaction operation for a first target control component among the at least one control component in the image, operation information associated with the first target control component comprises:
determining, in response to reception of authorization information returned by the central control system of the vehicle, the operation information.

6. The method according to claim 5, wherein transmitting, in response to detection of a second interaction operation for a second target control component among the at least one control component in the image, an authorization request to the central control system comprises:
determining an in-vehicle function module associated with the second target control component in the vehicle; and
transmitting an authorization request for the in-vehicle function module to the central control system of the vehicle,
wherein determining, in response to detection of a first interaction operation for a first target control component among the at least one control component in the image, operation information associated with the first target control component comprises:
determining, in response to reception of authorization information for the in-vehicle function module returned by the central control system of the vehicle and in response to having determined that the first target control component is associated with the in-vehicle function module, the operation information.

7. A method applied to a central control system of a vehicle, wherein the central control system comprises a central control panel, and the method comprises:
determining, in response to reception of operation information transmitted by a user terminal communicatively connected to the central control system of the vehicle, a control instruction to be executed on the basis of the operation information, wherein the operation information is generated by the user terminal by:
acquiring an image comprising the central control panel;
determining at least one control component on the central control panel in the image; and
determining, in response to detection of a first interaction operation for a first target control component among the at least one control component in the image, operation information associated with the first target control component.

8. **The** method according to claim 7, wherein the operation information comprises an operation type of the first interaction operation, and determining a control instruction to be executed on the basis of the operation information comprises:
determining an in-vehicle function module corresponding to the first target control component; and
determining, on the basis of the operation type of the first interaction operation for the first target control component, a control instruction for the in-vehicle function module.

9. The method according to claim 8, wherein determining, on the basis of the operation type of the first interaction operation for the first target control component, a control instruction for the in-vehicle function module comprises:
determining, on the basis of the operation type, the control instruction from an instruction table corresponding to the in-vehicle function module, wherein the instruction table stores mapping relationships between a plurality of preset operation types and a plurality of preset control instructions.

10. The method according to any one of claims 7 to 9, further comprising:
receiving an authorization request transmitted by the user terminal;
generating notification information for displaying the authorization request;
generating, in response to detection of an authorization interaction operation for the notification information, authorization information; and
returning the authorization information to the user terminal.

11. An apparatus for controlling a central control system of a vehicle, wherein the central control system comprises a central control panel, the apparatus is applied to a user terminal communicatively connected to the central control system, and the apparatus comprises:
an acquisition unit, configured to acquire an image comprising the central control panel;
a first determination unit, configured to identify at least one control component on the central control panel in the image;
a second determination unit, configured to determine, in response to detection of a first interaction operation for a first target control component among the at least one control component in the image, operation information associated with the first target control component; and
a transmission unit, configured to transmit the operation information to the central control system, so as to enable the central control system to determine a control instruction to be executed on the basis of the operation information.

12. An apparatus applied to a central control system of a vehicle, wherein the central control system comprises a central control panel, and the apparatus comprises:
a third determination unit, configured to determine, in response to reception of operation information transmitted by a user terminal communicatively connected to the central control system of the vehicle, a control instruction to be executed on the basis of the operation information, wherein the operation information is generated by the user terminal using:
an acquisition unit, configured to acquire an image comprising the central control panel;
a first determination unit, configured to determine at least one control component on the control panel in the image; and
a second determination unit, configured to determine, in response to detection of a first interaction operation for a first target control component among the at least one control component in the image, operation information associated with the first target control component.

13. A computer device, comprising:
one or more processors; and
a memory, storing instructions that, when executed individually or collectively by the one or
more processors, cause the computer device to execute the method according to any one of claims 1 to 6.

14. A computer device, comprising:
one or more processors; and
a memory, storing instructions that, when executed individually or collectively by the one or more processors, cause the computer device to execute the method according to any one of claims 7 to 10.

15. A vehicle, comprising:
a central control system, comprising a central control panel; and
the computer device according to claim 15.

16. A computer-readable storage medium, storing instructions that, when executed individually or collectively by one or more processors of a computer device, cause the computer device to execute the method according to any one of claims 1 to 10.

17. A computer program product, comprising instructions that, when executed individually or collectively by one or more processors of a computer device, cause the computer device to execute the method according to any one of claims 1 to 10.
